# EUROPÄISCHE PATENTSCHRIFT

(11) **EP 0 768 356 B1**
(45) Veröffentlichungstag und Bekanntmachung des Hinweises auf die Patenterteilung: **18.08.1999**
(21) Anmeldenummer: 96115504.1
(22) Anmeldetag: 27.09.1996
(51) Int. Cl.: C09J 123/08, C09J 7/02

(54) **Mindestens einschichtige Schmelzklebfolie mit release- und trennmittelfreier Wickelbarkeit aus polaren Copolymeren sowie niedermolekularen Harzen**
At least mono-lacquered melt-adhesive film wrappable without release or separation layers from polar copolymers and low molecular weight resins
Film adhésif à chaud au moins mono-couche enroulable sans couche de décollage ni de séparation à base de copolymères polares et résines de faible poids moléculaire

(30) Priorität: 10.10.1995 DE 19537754
(43) Veröffentlichungstag der Anmeldung: 16.04.1997
(73) Patentinhaber: WOLFF WALSRODE AG, 29655 Walsrode (DE)
(72) Erfinder: Gernot, Thomas, Dr., 27283 Verden (DE); Schultze, Dirk, Dr., 29683 Fallingbostel (DE); Brandt, Rainer, Dr., 29664 Walsrode (DE); Schwarz, Willi, 29699 Bomlitz (DE)
(74) Vertreter: Pettrich, Klaus-Günter, Dr.

(56) Entgegenhaltungen:
- EP-A- 0 094 991
- EP-A- 0 330 480
- EP-A- 0 424 761
- EP-A- 0 616 885

## Beschreibung

Die Erfindung betrifft Folien hergestellt aus Polymermischungen aus polaren Copolymeren insbesondere Ethylenvinylacetaten und Harzen für die Verklebung. Die entwickelten Polymermischungen können zu Einschicht- beziehungsweise Mehrschichtfolien verarbeitet werden. Sie lassen sich unter Verzicht auf Trennmittel oder Trennbahnen auf- und abwickeln. Durch eine rauhe Oberfläche besitzen die Folien gute Maschinengängigkeiten. Durch einen hohen Anteil an niedermolekularen Harzen wird eine verbesserte Verklebbarkeit erzielt.

Die erfindungsgemäßen thermoplastischen Hotmelt- oder Schmelzklebefolien eignen sich insbesondere zum Verkleben von porösen oder oberflächenrauhen Produkten sowie von Kunststoffen, die vorzugsweise aus Rohstoffen auf Polyolefin- oder Polyvinylchlorid- oder Polyester- oder Polyamidbasis bestehen. Sie sind vorteilhafterweise einzusetzen zum Verkleben von Bahnmaterialien wie Papieren, Pappen, Folien, Webwaren aber auch Vliesen. Sie können auch für Fixier- und Versiegelungsanwendungen eingesetzt werden. Durch ihren thermoplastischen Charakter bieten sie sich für wiederholte Aufschmelzvorgänge an und ermöglichen damit, die unter ihrer Verwendung aufgebauten Verbunde nachträglich wieder zu lösen. Die mit den genannten Werkstoffen hergestellten Verbunde lassen sich damit auch einem werkstofflichen Recycling zuführen.

Für die Zwecke der vorliegenden Erfindung wird unter einer Schmelzklebefolie eine Folie auf Basis von thermoplastischen Kunststoffen verstanden, die im geschmolzenen bzw. erweichten Zustand infolge ihrer dann vorhandenen Oberflächenklebrigkeit und Fließfähigkeit sowie ihrer Dicke geeignet ist, andere Substrate zu verbinden.

Es ist bekannt, daß Olefin-Copolymere mit Sauerstoffatome enthaltenden Comonomeren insbesondere das Ethylenvinylacetat für den Einsatz als Schmelzklebstoffe oder als Rezepturkomponente für Schmelzklebstoffe eignen. Die Copolymere sind beispielsweise von Saechtling im Kunststoff Taschenbuch, 24. Ausgabe, Hanser Verlag, München 1989, S. 243-246, oder von Domininghaus in: Die Kunststoffe und ihre Eigenschaften, 4. Auflage, VDI Verlag, Düsseldorf 1992, S. 82-123, beschrieben.

Die sauerstoffenthaltenden Olefin-Copolymere sind für ihren elastischen Charakter und verbesserte Hafteigenschaften bekannt. Zu den nach dem Stand der Technik realisierten Anwendungen zählen die als Haftvermittler- oder Siegelschichten in coextrudierten Folien, aber auch haftfeste Beschichtungen auf Metallen, Glas und Papier sind bekannt.

Zu den wichtigsten, in Olefin-Copolymeren enthaltenen, polaren Comonomerresten zählen die des Vinylacetats, in verseifter ebenso wie in unverseifter Form, der Acrylsäure sowie ihrer Ester und Salze und der Methacrylsäure sowie ihrer Ester und Salze.

Mit steigendem Comonomergehalt sinkt i.a. die Kristallisationsneigung des Copolymerisats, so daß u.a. Flexibilität, Transparenz, Spannungsrißbeständigkeit ebenso wie Klebrigkeit, Heißsiegelfähigkeit und Schweißbarkeit steigen bzw. verbessert werden. Da der Schmelzpunkt zudem absinkt, bieten sich die polaren Olefin-Copolymerisate damit idealerweise als Rohstoffe für Schmelzklebeanwendungen an, wobei hierfür normalerweise Copolymerisate mit hohen Comonomergehalten von 18-40 Massen-% eingesetzt werden. Den Mechanismus der verbesserten Haftung erläutert z.B. Elias in: Makromoleküle, Bd. 2, 5. Auflage, Hüthig & Wepf Verlag, Basel 1992, S. 134-135. In Abhängigkeit von den zu verklebenden Substraten und ihrer Oberfläche werden als Hotmelt-Rohstoffe im allgemeinen Materialien mit guten Fließeigenschaften, d.h. hohem Schmelzflußindex eingesetzt. Am Markt sind polare Olefin-Copolymere mit Schmelzflußindices von kleiner 0,1 g/10 min bis über 500 g/10 min erhältlich, jeweils gemessen nach DIN 53 735 bzw. ASTM D 1238 bei 190°C und einer Prüfbelastung von 21,2 N.

Weiterhin ist es bekannt, Schmelzklebefolien aus thermoplastischen Hotmelt-Rohstoffen herzustellen und zu verarbeiten.

Die Klebkaft der Copolymere steigert sich bekannterweise mit steigendem Comonomergehalt. Für Schmelzklebefolien werden allgemein Copolymere mit Comonomergehalten über 16 Massen-% eingesetzt. Mit steigendem Comonomergehalt verringern sich aber auch die Verarbeitungsmöglichkeiten. Während aus polaren Copolymeren mit Comonomergehalten unter 10 Massen-% ohne größere Schwierigkeiten Folien erhalten werden können, ist es gleichermaßen bekannt, daß Materialien mit Comonomergehalten ab 16 Massen-% auf dem Wickel verblocken.

Mit steigendem Comonomergehalt erhöhen sich Transparenz und Glanz der erhaltenen Folie, die Oberfläche der hergestellten Halbzeuge wird glatter.

Die Zugabe der bekannten Antiblock- und Entformungsmittel verbietet sich bzw. hat unerwünschte Nebeneffekte für Schmelzklebefolien, da sich durch den Einsatz dieser Materialien die Klebkraft der Folie in dem Maße verringert, wie die Additive die Folienoberflächen belegen. Die Zugabe von anorganischen Abstandhaltern, die eine diskrete Verteilung in der Polymermatrix besitzen, resultiert in etwa in einem Klebkraftabfall proportional zum Additivgehalt. Die Zugabe von Entformungsmitteln, vielfach wachsartige Substanzen, die aufgrund ihrer Unverträglichkeit mit der Polymermatrix aus dieser hinausmigrieren und einen Film auf der Folienoberfläche bilden, bewirkt u.U. einen drastischen Verlust an Klebkraft.

Es ist weiterhin bekannt, daß durch Zugabe eines niedermolekularen Harzes mit einem nicht wachsartigen Charakter, sowohl natürlicher als auch synthetischer Art, eine deutliche Verbesserung hinsichtlich der Klebeigenschaften eines Co- oder Terpolymeren mit polaren Comonomeren erzielt werden kann. Diese hierunter zu verstehenden Harze besitzen entsprechend den Angaben in Ullmanns Enzyklopädie der technischen Chemie, Band 12, 4. Auflage, Verlag Chemie, Weinheim 1976, S. 525 - 555 eine durchschnittliche Molekularmasse unterhalb von 2000 g/mol. Alle Harze, sowohl die bei Raumtemperatur flüssigen wie die festen, sind nicht kristallisierbar und besitzen aufgrund komplexer Strukturen meist keinen scharfen Schmelzpunkt. Die unter dem Begriff niedermolekulare Harze verstandenen Materialien haben einen Erweichungstemperatur, gemessen mit Kugel und Ring gemäß ASTM E-28 bzw. DIN 1995, von bis zu 200°C.

Die in diesem Patent bevorzugten niedermolekularen Harze können den folgenden Stoffklassen angehören (siehe hierzu Ullmanns Enzyklopädie der technischen Chemie, Band 12,4. Auflage, Verlag Chemie, Weinheim 1976, S. 525 - 555):

Natürliche Harze: Asphaltite, Balsame, Kiefernbalsame, rezente Harze, fossile Harze, Kolophonium (insbesondere Balsamkolophonium, Wurzelharz und Tallharz), Kolophonium-Derivate (Herstellung der Derivate durch Reaktion mit den kollophoniumeigenen Doppelbindungen in Form von Disproportionierung, Hydrierung, Polymerisation und Additionsreaktionen unter gleichzeitiger Isomerisierung sowie eventuell anschließender Veresterung und/oder durch Reaktion der kollophoniumeigenen Carboxylgruppe bzw. -gruppen zu Estern, Salzen, Nitrile bzw. aus Nitrilen hergestellte Amine, durch Reduktion der kollophoniumeigenen Carboxylgruppe bzw. -gruppen zu Alkoholen und durch Decarboxylierung der kollophoniumeigenen Carboxylgruppe bzw. -gruppen zu Kohlenwasserstoffölen), Schellack.

Synthetische Harze: Kohlenwasserstoffharze (Erdöl- oder Petroleumharze wie aliphatische Harze oder aromatische Harze oder Kondensatharze, Harze aus Kohlenteer und hydrolysierte oder nicht hydrolysierte Terpenharze wie die Polymerisate oder Copolymerisate von alizyklischen oder mono-zyklischen oder bizyklischen Terpene oder Mischungen hiervon oder Karene oder isomerische Pinene oder Dipentene oder Terpinene oder Terpinole oder Turpentine), teilweise oder vollständig hydrierte Kohlenwasserstoffharze und/oder modifizierte Kohlenwasserstoffharze (Modifikation durch Reaktion des Harzrohstoffs vor der Polymerisation zum eigentlichen Kohlenwasserstoffharz oder durch Reaktion des polymerisierten Produktes; die Modifikation erfolgt durch Reaktion mit ungesättigten Carbonsäuren oder Carbonsäureanhydriden und eventuell einer nachfolgenden Verseifung, Veresterung oder durch Reaktion mit Phenol oder Alkylphenolen oder durch Reaktion mit Formaldehyd), Inden-Cumaron-Harze, Furanharze, Ketonharze (Harze aus aliphatischen Ketone, Acetophenon-Harze, Cyclohexanon-Harze), Polyamidharze.

Eines der größten Probleme bei der Verarbeitung dieser niedermolekularen Harze liegt in der Einarbeitung dieser Stoffe in die anderen Polymermischungsbestandteile. Bei der Verarbeitung des Reinstoffs mit den anderen Polymergranulaten kommt es in konventionellen Schneckenmaschinen, die zum Aufschluß der Polymermischung und der Ausbringung mit Hilfe eines Werkzeuges standardmäßig eingesetzt werden, im Bereich der Zylindereinzugstasche zur Agglomeratbildung dieser Rohstoffe. Dies führt dazu, daß kein kontinuierlicher Schneckeneinzug gewährleistet werden kann und es häufig zum Einbruch der Ausbringungsmenge kommt. Dieser Effekt tritt insbesondere bei den niedermolekularen Harzen, die vornehmlich für die Schmelzklebeanwendung geeignet sind, auf. Hierbei ist die Art und Form des Einzugsbereichs der Schneckenmaschine unerheblich, da dieser Effekt auf verschiedenen Maschinenfabrikaten auftritt.

Für diese Erfindung überraschend hat sich gezeigt, daß die Agglomeratbildung verhindert werden kann, indem man das niedermolekulare Harz in Form eines Masterbatches der Polymerrohstoffmischung hinzufügt und dann dieses Granulatgemisch auf einer konventionellen Schneckenmaschine verarbeitet.

Unter dem Begriff Masterbatch ist im Rahmen der vorliegenden Erfindung eine Stammischung zu verstehen, insbesondere ein granulatförmiges, trennmittelfreies Konzentrat eines makromolekularen Polymerharzes mit hohen Mengen an niedermolekularen Harzen, das in der Masseaufbereitung als Zwischenprodukt verwendet wird und als Zusatz zu den keine niedermolekularen Harze enthaltenden Granulaten vor der Verarbeitung hinzugefügt wird, um daraus bestimmte Mengen an niedermolekularen Harzen enthaltenden Folien herzustellen.

Das Masterbatch wird nach dem erfindungsgemäßen Verfahren vor dem Einfüllen des Polymergranulates in den Extruder in einer derartigen Menge zu den übrigen Rohstoffgranulaten zugemischt, daß der gewünschte Masseprozentanteil an niedermolekularen Harzen in der Folie realisiert wird. Bei dem makromolekularen Polymer kann es sich, jedoch ist dies nicht unbedingt zwingend erforderlich, um ein Rohstoff handeln, der ebenfalls in der Polymermischung verwandt wird.

Ebenfalls ist über diese niedermolekularen Harze bekannt, daß sie zu einer deutlichen Reduzierung der Schmelzviskosität von Polymermischungen führen. Dies führt letztendlich zu einer deutlichen Vergleichmäßigung der Schmelzehomogenität und damit zu einer unproblematischen Verarbeitung.

Bedingt durch den weichen Charakter der Copolymere und ihre geringen Erweichungs- bzw. Schmelztemperaturen sowie durch die Fließfähigkeitsverbesserung durch Zugabe der genannten niedermolekularen Harze besitzen Folien aus diesen Materialien den Nachteil, daß sie sehr glatte Oberflächen aufweisen, die dadurch den Folien einen blockigen Charakter geben. Hierdurch sind Maschinengängigkeiten beeinträchtigt, die Folien müssen permanent durch bewegliche Teile geführt oder mit Trennmaterialbahnen belegt werden, um eine Verbindung mit stehenden Teilen und damit die Unterbrechung des Prozesses zu verhindern.

Eine Möglichkeit, blockige Copolymere zu Filmen zu verarbeiten, besteht in der Integration in Mehrschichtaufbauten, bei denen sich die verschiedenen Schichten nur in der Wärme verbinden und in der Kälte nicht gegeneinander verblocken. So beschreiben die Offenlegungsschriften US 4 629 657, EP 0 424 761 oder EP 0 263 882 Polyolefinfolien, die mit heißklebefähigen Stoffen beschichtet sind. In diesem Fall übernimmt die weniger klebrige Schicht die Funktion der Trennschicht. Diese Folien weisen den Nachteil auf, daß sie nur eine heißklebefähige Seite besitzen, zudem ist die erzielbare Verbundhaftung gering und die Endprodukte besitzen eine nicht unerhebliche Rollneigung. In der EP 0 424 761 erwähnte Schichten aus Mischungen polarer Olefin-Copolymerisate wurden nicht zu einzelnen, selbsttragenden Schichten verarbeitet. Sie besaßen zudem eine Trenn- oder Trägerschicht aus Polypropylen, so daß sie nicht in einen Wickelkontakt mit sich selbst treten konnten.

Aufgrund der hohen Blockigkeit bzw. geringen Gleitfähigkeit der einschichtig mit üblichen Olefin-Copolymeren beschichteten Folien kommt es zu Schwierigkeiten bei der Maschinengängigkeit: Falten ziehen sich nicht mehr von alleine glatt, es muß mit einer Vielzahl von Breitstreckeinrichtungen gearbeitet werden. Letztere müssen angetrieben werden oder machen einen hohen Bahnzug notwendig. Insbesondere bei weichen Olefin-Copolymeren kommt es bei höherem Bahnzug zu deutlichen Einschnürungen, so daß eine Dimensionstreue nicht mehr gewährleistet ist. Angetriebene Breitstreckwalzen bedeuten einen sehr viel größeren technischen Aufwand.

Beim Einsatz als Fixiermedien ist es zudem von Nachteil, wenn die zu fixierenden Teile aufgrund der Materialblockigkeit nicht gegeneinander justiert werden können.

Allgemein verbreitet für die Verarbeitung dieser Materialien zu einschichtigen Bahnen ist der Einsatz von Trennmaterialien. Bekannte universell einsetzbare Trennmaterialbahnen bestehen beispielsweise aus silikonisierten Papieren, Geweben oder Folien.

Der Nachteil von Trennfilmen oder anderen Bahnmaterialien, wie sie beispielsweise in der DE 2 114 065 erwähnt sind, liegt darin, daß sie zusätzliche Lager- und Verarbeitungskapazitäten benötigen. Trennmaterialien lassen sich nie vollständig recyclieren, damit stellen Trennmaterialien auch eine finanzielle und ökologische Belastung dar. Zusätzlich besteht durch den Verzicht auf Trennmittel nicht mehr das Risiko, daß sich ein Abklatsch migrierender Substanzen aus oder von dem Trennmaterial auf dem Schmelzklebefilm niederschlagen und damit die Klebewirkung beeinträchtigen kann.

Die nicht vorveröffentlichte DE 4 436 775 beschreibt einschichtige, Olefin-Copolymer basierende Schmelzklebefolien mit Release- und Trennmittelfreier Wickelbarkeit und verbesserter Adhäsion, die aus Mischungen von Olefin- Copolymerisaten mit unterschiedlichen Comonomeren hergestellt werden.

Es stellte sich den Erfindern daher die Aufgabe, eine mindestens einschichtige Folie mit hoher Klebkraft für Thermokaschierung, -versiegelung und -fixierung bereitzustellen, die sich Trennmittelfrei wickeln und sich blockarm gleitend über die gängigen Heißkaschiermaschinen und Fixierpressen führen läßt.

Sie sollte zudem in ihrer Zusammensetzung optimal an die zu verklebenden Substrate anpassbar sein. Sie sollte sich wiederholt aufschmelzen lassen, so daß auch ein nachträgliches Justieren fixierter Substrate oder ein Lösen der Verbunde möglich ist. Außerdem sollte sie eine deutliche Verbesserung in der Verbundhaftung im Verhältnis zu hochvinyacetathaltigen Filmen besitzen.

Erfindungsgemäß gelang die Herstellung einer solchen thermoplastischen, durch Wärmezufuhr und gegebenenfalls unter Druck heißkaschierbaren, wickelbaren thermoplastischen Schmelzklebefolie, durch das Abmischen polarer Olefin-Co-bzw. Terpolymerisate, die Sauerstoffatome enthalten, mit niedermolekularen Harzen. Als olefinisches Comonomer wird Ethylen im wesentlichen bevorzugt. Es können aber auch Comonomere aus α-Olefinen mit 3 bis 10 Kohlenstoffatomen verwendet werden. Zum Erhalt einer erfindungsgemäßen Folie müssen mindestens zwei verschiedene polare, sauerstoffenthaltende Olefin-Co- bzw. Terpolymere (i) und (ii), die sich nicht in den vorgesehenen Konzentrationsverhältnissen ineinander lösen und es somit bei deren Mischung zur Ausbildung unterschiedlicher Polymerphasen kommt, mit niedermolekularen Harzen gemischt und gemeinsam unter ausreichender Scherung aufgeschlossen werden. Bei mindestens einem der eingesetzten Polymeren (i) handelt es sich um ein Ethylenvinylacetatcopolymer. Der Gesamtanteil der polaren, Sauerstoff enthaltenden Comonomere sollte zwischen 3 Massen-% und 30 Massen-%, bezogen auf die Gesamtmasse der eingesetzten Polymerharze, liegen. Bevorzugt wird ein Anteil an Sauerstoff enthaltenden Comonomeren von unterhalb 20 Massen-%. Das in der Polymermischung enthaltene Ethylenvinylacetatcopolymer sollte mit einem Masseanteil von mindestens 35 Massen-% an der Gesamtmasse der eingesetzten Polymerharze vorhanden sein. Der niedermolekulare Harzanteil (iii) zur Klebverbesserung beträgt zwischen 2 und 30 Massen-% mit einer durchschnittlichen Molekularmasse von weniger als 2000 g/mol. Die erfindungsgemäße Folie kann bis zu einem Anteil von 5 Massen-% (iv) mit den üblichen Additiven und Hilfsmitteln, die keine Trennmittelfunktion aufweisen, ausgerüstet werden. Hierunter fallen zum Beispiel Stabilisatoren, optische Aufheller, feinpigmentierte Farbstoffe und/oder Gleitmittel wie zum Beispiel Glycerinmonostearat, Ölsäureamid, Erucasäureamid oder Polysiloxane (siehe Saechtling, Kunststoff Taschenbuch, 24. Ausgabe, Hanser Verlag, München 1989, S. 497 - 498, oder Gächter/Müller, Kunststoffadditive, 2. Ausgabe, Hanser Verlag, München 1983, S. 348 - 353, oder McKenna, Fatty Amides, Witco Chemical Corporation, Memphis 1982, S. 180-194).

Für den Fachmann überraschend war, daß sich eine Mischung aus mindestens zwei polaren Olefin-Co- bzw. Terpolymeren unter Zugabe von niedermolekularen Harzen bei den üblichen Verarbeitungstemperatur zu einer Folie mit einer ausreichend hohen Oberflächenrauhigkeit verarbeiten läßt, so daß kein Verblocken auf dem Wickel stattfindet. Aufgrund der Oberflächenrauhigkeit liegen die Folienbahnen auf dem Wickel nicht plan übereinander, sondern berühren sich nur in den erhabenen Punkten der jeweiligen Folienlagen. Der Effekt wird durch die von der rauhen Folie in den Wickel eingeschleppte Luftmenge unterstützt, so daß kein Verblocken auftritt. Die Folie weist im Vergleich zu Folien gemäß dem Patent DE 4 436 775 eine deutlich verbesserte Verbundhaftung auf.

Entscheidend für die trennmaterialfreie Wickelbarkeit ist die Ausbildung einer ausreichenden Oberflächenrauhigkeit, die nur dann erfolgt, wenn die eingesetzten polaren Copolymere Comonomere aufweisen, die in der Schmelze bereits Domänen ausbilden, so daß von einer Entmischungsstruktur gesprochen werden kann und man nicht von einer einphasigen Polymerlösung spricht. Nicht naheliegend war, daß trotz Zugabe von niedermolekularen Harzen und dem hiermit verbundenen veränderten Phasenverhalten die Entmischungsstrukturen bestehen bleiben und sich keine einphasige Löslichkeit einstellt. Weiterhin war nicht naheliegend, daß, obwohl die niedermolekularen Harze die Klebeigenschaften von Ethylenvinylacetatcopolymeren bei der thermischen Verbindung dieser Folien mit Substraten sehr deutlich verbessern, in gleichem Maße ein Verblocken der Folien nach der Produktion nicht festzustellen ist und daß die Folien sich leicht wieder abrollen lassen. Der Aufschmelzprozeß der Mischung aus den verschiedenen polaren Olefin-Co- bzw Terpolymeren muß außerdem unter ausreichender Scherung erfolgen, damit größere Domänen in der Schmelze im Schergefälle zerteilt werden, da die sonst aus dem Folienwerkzeug ausgetragenen Entmischungsstrukturen derart große Dimensionen erreichen können, daß sie als Gelkörper die Ausformung zu Folie stören. Sie stellen die Ursache für unerwünscht hohe Dickentoleranzen und mögliche Abrisse der zu Folie ausgezogenen Schmelze dar.

Erfindungsgemäß geeignet sind Olefin-Co- bzw. Terpolymer-Harze, zu deren Synthese als olefinische Monomere Ethylen oder α-Olefinen mit 3 bis 10 Kohlenstoffatomen eingesetzt werden. Bei mindestens einem der eingesetzten Polymer-Harze (i) handelt es sich um Ethylenvinylacetatcopolymer. Als niedermolekulare Harze werden die oben aufgelisteten Rohstoffe bevorzugt eingesetzt.

In einer besonderen Ausführungsform werden Kolophonium, Kolophonium-Derivate, Kohlenwasserstoffharze, teilweise oder vollständig hydrierte wasserstoffharze, modifizierte Kohlenwasserstoffharze und/oder Ketonharze eingesetzt.

In einer besonders bevorzugten Ausführungsform werden Kolophonium und/oder Kolophonium-Derivate eingesetzt.

Die in dieser Erfindung besonders bevorzugten niedermolekularen Harzmaterialien haben einen Erweichungspunkt, gemessen mit Kugel und Ring, zwischen 60°C und 180°C und in einem noch mehr bevorzugten Bereich zwischen 80°C und 115°C.

In einer bevorzugten Ausführungsform besteht die Folie hauptsächlich aus polaren, Sauerstoff enthaltenden Olefin-Co- bzw. Terpolymeren, deren Comonomergehalt so gewählt ist, daß der Gesamtanteil an polaren, Sauerstoff enthaltenden Comonomeren im Verhältnis zu den übrigen Co- bzw. Termonomeren zwischen 3 Massen-% und 30 Massen-% beträgt.

In einer bevorzugten Ausführungsform werden für die polaren Olefin-Copolymere der Mischungskomponente (ii) Harze, die Ethylen und mindestens ein Comonomeres aus Vinylacetat, Methylacrylsäure, ihrer Salze, ihrer Ester, Acrylsäure, ihrer Salze oder ihrer Ester enthalten, eingesetzt.

In einer besonders bevorzugten Form werden Olefin-Copolymer-Harze für die Mischungskomponente (ii) verwendet, die als entscheidende olefinische Comonomerreste die des Ethylens aufweisen und zu deren Synthese als wesentliches polares, Sauerstoffatome enthaltendes Comonomeres das Vinylacetat eingesetzt wurde. Die Vinylacetat-Comonomer-Reste liegen hierbei in vorzugsweise unverseifter Form vor.

In einer besonderen Ausführungsform besitzt die erfindungsgemäße Schmelzklebefolie eine arithmetische Mittenrauhigkeit größer als 0,3 µm gemessen nach DIN 4768/1 mit einer Meßstreckenlänge Iₘ von 12,5 mm.

Eine Auswahl des Schmelzflußindices ermöglicht eine Anpassung an die Oberflächenstruktur der Substrate sowie die Verarbeitungsmaschinen, für poröse, rauhe Oberflächen ebenso wie für geringe Verarbeitungsdrücke werden Copolymere mit höheren Schmelzflußindices eingesetzt, Copolymere mit niedrigen Schmelzflußindices hingegen für vergleichsweise feine bis glatte Substrate und hohe Verarbeitungsdrücke. In einer besonderen Ausführungsform besitzt die Polymermischung einen maximalen Meltflowindex von höchstens 25 g/10 min (gemessen nach ASTM D 1238 bei 190°C und 21,2N).

In einer besonders bevorzugten Ausführungsform besitzt die Polymermischung einen maximalen Meltflowindex von höchstens 10 g/10 min (gemessen nach ASTM D 1238 bei 190°C und 21,2N).

In einer besonderen Ausführungsform besitzen die einzelnen verwendeten Co- und/oder Terpolymere (i) und (ii) jedoch nicht die niedermolekularen Harze (iii) einen maximalen Meltflowindex von 99 g/l0min (gemessen nach ASTM D 1238 bei 190°C und 21,2 N).

In einer besonders bevorzugten Ausführungsform besitzen die einzelnen verwendeten Co- und/oder Terpolymere (i) und (ii) jedoch nicht die niedermolekularen Harze (iii) einen maximalen Meltflowindex von 19 g/10min (gemessen nach ASTM D 1238 bei 190°C und 21,2 N).

In einer bevorzugten Ausführungsform besteht die Folie hauptsächlich aus polaren Sauerstoff enthaltenden Olefin-Co- bzw. Terpolymeren, deren Comonomergehalt so gewählt ist, daß der Gesamtanteil an polaren, Sauerstoff enthaltenden Comonomeren im Verhältnis zu den restlichen Co- bzw. Terpolymeren unterhalb von 20 Massen-% liegt.

In einer besonders bevorzugten Ausführungsform besteht die Folie hauptsächlich aus polaren Sauerstoff enthaltenden Olefin-Co- bzw. Terpolymeren, deren Comonomergehalt so gewählt ist, daß der Gesamtanteil an polaren, Sauerstoff enthaltenden Comonomeren im Verhältnis zu den restlichen Co- bzw. Terpolymeren unterhalb von 16 Massen-% liegt. Diese Folien weisen trotz Zugabe von niedermolekularen Harzen aufgrund der rauhen Oberfläche, die durch die Mehrphasigkeit der Polymermischung hervorgerufen wird, eine geringere Blockigkeit als vergleichbare einphasige Folien ohne Beimischungen von niedermolekularen Harzen.

Das niedermolekulare Harz wird in Form eines Masterbatches der Polymermischung kurz vor dem Verarbeitungsschritt zur Folie zugeführt, wobei neben dem niedermolekularen Harz als zweiter Rohstoff ein Copolymer aus Ethylen sowie Säuregruppen und/oder Estergruppen und/oder anderen polaren Gruppen inklusive deren Salze oder mindestens einem Copolymeren aus α-Olefin mit 3 bis 10 Kohlenstoffatomen sowie Säuregruppen und/oder Estergruppen und/oder anderen polaren Gruppen inklusive deren Salze oder mindestens einem Terpolymeren aus Ethylen und α-Olefin mit 3 bis 10 Kohlenstoffatomen sowie Säuregruppen und/oder Estergruppen und/oder anderen polaren Gruppen inklusive deren Salze eingesetzt wird. Bei diesem Masterbatch kann es sich auch um ein Kombibatch handeln, mit dem weitere Polymermischungsadditive wie Beispielsweise Stabilisatoren, optische Aufheller, Farbstoffe und/oder Gleitmittel, die keine Trennmittelfuktion besitzen, wie zum Beispiel Glycerinmonostearat, Ölsäureamid, Erucasäureamid oder Polysiloxane, der Polymermischung hinzugeführt werden.

In einer besonderen Ausführungsform besteht das Masterbatch aus 20 - 90 Massen-% niedermolekularen Harzen und aus 10 - 80 Massen-% von mindestens einem der folgenden Polymeren:
Copolymeren aus zum einen mindestens 80 Massen-% Ethylen und zum anderen aus Vinylacetat oder Methylacrylsäure oder ihrer Salze oder ihrer Ester oder Acrylsäure oder ihrer Salze oder ihrer Ester.

In einer besonderen Ausführungsform besitzt die Folie einem maximalen Schmelzpunkt von 110°C, der durch DSC-Messung nach ASTM D 3418 bei einer Aufheizrate von 10 K/min gemessen wird.

In einer besonderen Ausführungsform handelt es sich bei der Folie um eine einschichtige, uniaxial oder biaxial verstreckte Folie.

In einer besonderen Ausführungsform handelt es sich bei der Folie um eine mindestens zweischichtige Mehrschichtfolie, wobei Schicht (a), die auch als Klebschicht bezeichnet wird, aus der oben beschriebenen Polymermischung besteht und die weiteren Schichten, die auch als Trägerschichten (b) bezeichnet werden, aus Polyethylen und/oder aus Polymeren aus α-Olefinen mit 3 bis 10 Kohlenstoffatomen in der polymeren Wiederholungseinheit und/oder aus Polyvinylchlorid und/oder aus Polyester und/oder aus Polyamid bestehen.

In einer ganz besonderen Ausführungsform handelt es sich bei der Folie um eine mindestens zweischichtige Mehrschichtfolie, die dadurch gekennzeichnet ist, daß die Trägerschicht bzw. Trägerschichten (b) mit Gleitmitteln auf Basis Glycerinmonostearat, Ölsäureamid, Erucasäureamid oder Polysiloxanen und mit Antiblockadditiven auf Basis Siliziumdioxid, Calciumcarbonat, Titandioxid, natürlichen oder synthetischen Kieselsäuren oder einem Polymer, dessen Schmelzverhalten sowie rheologischen Eigenschaften so abgestimmt sind, daß es in dem Trägerwerkstoff eine eigene Phase ausbildet, versetzt sind und die einseitig eine hochglänzende Oberfläche besitzt.

In einer ganz besonderen Ausführungsform dieser Folie besteht die Trägerfolie (b) aus mindestens drei Schichten, die dadurch gekennzeichnet sind, daß mindestens eine der Schichten mit Gleitmitteln auf Basis Glycerinmonostearat, Ölsäureamid, Erucasäureamid oder Polysiloxanen und die Trägerschicht, die die Folienaußenseite bildet und eine matte Struktur aufweist, eine Schichtdicke von 0,5 bis 5,0 µm hat und aus
10 - 78 Massen-% eines oder mehrerer Polyethylen-Polypropylen-Blockcopolymeren,
2 - 15 Massen-% eines auf Ethylen basierenden Co- oder Terpolymeren, das modifiziert ist mit polaren Gruppen,
15 - 45 Massen-% eines aus Ethylen-Propylen oder Ethylen-Butylen oder Propylen-Butylen oder Ethylen-Propylen-Butylen aufgebauten statistischen Co- oder Terpolymeren,
5 - 30 Massen-% eines Polyethylens mit hoher Dichte und
0 - 5 Massen-% Antiblockadditiven auf Basis Siliziumdioxid, Calciumcarbonat, Titandioxid, natürlichen oder synthetischen Kieselsäuren besteht.

In einer besonderen Ausführungsform wird die Folie in der Form hergestellt, daß zuerst ein 1 bis 3-schichtiger Film nach an sich bekannten Verfahren extrudiert bzw. coextrudiert wird. Dieser coextrudierte Film wird nach dem Verlassen der Breitschlitzdüse auf einem Kühlwalzenstuhl mit oder ohne Wasserbad abgekühlt. Anschließend wird der Film erneut auf ca. 90 bis 140°C aufgeheizt und erfährt eine Längsreckung im Verhältnis von 1:3 bis 1:7, jedoch in einer bevorzugten Variante eine Längsreckung im Verhältnis von 1:4,5 bis 1:5,5. Nach der Längsreckung erfolgt bei Temperaturen zwischen 150°C und 180°C eine Querreckung im Verhältnis von 1:7 bis 1:12, jedoch in einer bevorzugten Variante eine Querreckung im Verhältnis von 1:9 bis 1:11. Vor dem Auslauf aus dem Recktunnel wird der Film thermofixiert. Vor dem Aufwickeln kann eine Coronavorbehandlung einseitig oder beidseitig erfolgen. Die Klebschicht, bestehend aus einer der oben genannten Polymermischungen, kann hierbei (I) inline durch Coextrusion oder durch ein zusätzliches Auftragswerk vor der Längsreckung oder durch ein zusätzliches Auftragswerk nach der Längsreckung aber vor der Querreckung oder durch ein zusätzliches Auftragswerk nach der Querreckung aufgebracht werden oder (II) off-line in einem nachgestalteten Verfahrensschritt auf die Folie aufgetragen werden.

In einer besonderen Form lassen sich die erfindungsgemäßen Folien mit Hilfe der gängigen Oberflächenbehandlungsverfahren, bevorzugt sind Corona-, Flamm-, Plasma- und/oder Fluor-Behandlung, in ihren Oberflächeneigenschaften an die zu verbindenden Substrate anpassen. Verschiedene Verfahren zur Oberflächenmodifikation sind beispielsweise von Gerstenberg in: Coating 4/93, S.119-122, beschrieben.

Gegenstand der Erfindung ist weiterhin ein Verfahren zur Herstellung von Verbunden aus beliebigen Substraten und einer erfindungsgemäßen Folie, das dadurch gekennzeichnet ist, daß man die Folie mit mindestens einem Substrat unter Wärmeeinfluß bis zur Schmelzeerwärmung und vorzugsweise unter Druckbeaufschlagung zusammenbringt. In einer bevorzugten Ausführung wird die Folie zwischen zwei unterschiedliche Substrate gelegt und verbindet diese nach Zusammenführung und dem Einfluß von Wärme und Druck. Diese erfinderische Folie ist also im besonderen dadurch gekennzeichnet, daß sie als Schutz- bzw. Hotmeltfolie für die Papier-, Papp- oder Folienbahnkaschierung unter Einwirkung von Wärme und Druck eingesetzt wird.

Durch Auswahl geeigneter polarer Copolymere ist eine Anpassung der Klebeeigenschaften an die gewünschten Substrate möglich. Werden Säurecopolymere oder Ionomere gewählt, lassen sich bessere Verklebungseigenschaften mit Metall oder Glas erzielen, bei Einsatz von Vinylacetat-Copolymeren wird die Haftung zu Papier und zellstoffbasierenden Produkten optimiert.

Die Schmelze kann in den für die Folienherstellung bevorzugten Aufschlußwerkzeugen, die nach dem Schneckenprinzip arbeiten, nachgeschalteten Mischaggregaten oder auch im Folienwerkzeug einer Scherung unterworfen werden. Besonders bevorzugt ist die Scherung der Schmelze in dem nach dem Schneckenprinzip arbeitenden Aufschlußwerkzeug und/oder einem direkt nachgeschalteten dynamischen Mischaggregat.

Die erfindungsgemäßen Folien lassen sich nach dem Flachfolien- oder nach dem Blasfolienverfahren herstellen. In einer bevorzugten Ausführung werden die Folien nach dem Blasfolienverfahren hergestellt. Das Blasfolienverfahren ermöglicht durch unterschiedliche Aufblasverhältnisse eine flexible Anpassung der Liegebreite an die Erfordernisse des Marktes.

Bestandteile der erfindungsgemäßen Schmelzklebefolie können weiterhin die üblichen Additive und Hilfsmittel sein, dies sind beispielsweise Stabilisatoren, optische Aufheller, Farbstoffe und Keimbildner, Füllstoffe und/oder Gleitmittel, die keine Trennmittelfunktion besitzen, wie z. B. Glycerinmonostearat, Ölsäureamid, Erucasäureamid oder Polysiloxane (siehe Saechtling, Kunststoff Taschenbuch, 24. Ausgabe, Hanser Verlag, München 1989, S. 497 - 498, oder Gächter und Müller, Kunststoffadditive, 2. Ausgabe, Hanser Verlag, München 1983, S. 348 - 353, oder McKenna, Fatty Amides, Witco Chemical Corporation, Memphis 1982, S. 180-194).

Bei den Substraten handelt es sich vorzugsweise um Bahnmaterialien oder Abschnitte davon. Solche Bahnmaterialien sind beispielsweise Webwaren, Vliese, Folien, Papiere, Pappen und Kartonagen. Sie bestehen aus Zellstoff oder zellstoffenthaltenden Produkten, anderen pflanzlichen Produkten, Fasermaterialien, Kunststoffen oder auch Metallen.

Gegenstand der Erfindung sind ferner Folienab- oder -ausschnitte allgemein durch Stanzen oder Schneiden hergestellt und ihr Einsatz zum Fixieren und/oder Versiegeln von Materialien oder Gegenständen gegeneinander, dadurch gekennzeichnet, daß Ab- oder Ausschnitte der erfindungsgemäßen Folie zwischen zwei gleiche oder unterschiedliche Materialien oder Gegenstände gebracht werden und eine Verbindung in Form einer Versiegelung oder Fixierung unter Wärme und optional Druck stattfindet. Als dieserart zu verbindende Stoffe kommen bevorzugt Zellstoff oder Zellstoff enthaltende Produkte, Hölzer, pflanzliche, synthetische und tierische Fasermaterialien, Kunststoffe, Metalle und Gläser in Frage.

Die erfindungsgemäßen Verbunde und/oder Verbindungen sind thermoreversibel. Sie lassen sich somit nach dem Einsatz wieder in die Ausgangskomponenten zerlegen, so daß die verwendeten Materialien dem werkstofflichen Recycling zur Verfügung stehen.

### Beispiele

### Beispiel 1:

Eine Mischung aus 85 Massen-% eines Ethylen-Vinylacetat-Copolymeren (I) und 5 Massen-% eines Ionomeren (II) und 10 Massen-% eines Masterbatches aus einem Kohlenwasserstoffharz und einem Ethylen-Vinylacetat-Copolymeren (III) wurde in einer Schneckenmaschine unter Scherung und Wärmeeintrag aufgeschlossen und mit Hilfe eines Folienblaskopfwerkzeugs zu einem Schlauch ausgeformt. Das Ethylen-Vinylacetat-Copolymer (I) hatte einen Schmelzflußindex zwischen 2 und 3 g/10min, gemessen nach DIN 53735 bei 190°C unter einer Prüfkraft von 21,2 N. Der Vinylacetatgehalt des Copolymeren betrug ca. 12 Massen-%. Bei dem Ionomer (II) handelt es sich um ein Zink-Ionomer-Harz mit einem Schmelzflußindex unterhalb von 1 g/ 10 min, gemessen nach DIN 53735 bei 190°C unter einer Prüfkraft von 21,2 N. Das Ionomer hat ein Schmelzpunkt von 73°C gemessen nach der ASTM D 3418 Vorgehensweise bei einer Heizrate von 20 K/min. Nach der ASTM D 1525 Vorgehensweise wurde ein Vicat-Erweichungs-Punkt von 46°C bestimmt. Das Masterbatch (III) setzt sich zu 60 Massen-% aus einem Kohlenwasserstoffharz (i) und zu 40 Massen-% aus einem Ethylen-Vinylacetat-Copolymeren (ii) zusammen. Bei dem Kohlenwasserstoffharz (i) handelt es sich um ein Terpenharz mit einer Ring-Kugel Erweichungstemperatur nach DIN 1995 von ca. 105°C. Das Ethylen-Vinylacetat-Copolymer (ii) hat einen Vinylacetatgehalt von ca. 9 Massen-% und einen Schmelzflußindex zwischen 7 und 9 g/10min, gemessen nach DIN 53735 bei 190°C unter einer Prüfkraft von 21,2 N. Der gefertigte Schlauch hatte eine Dicke von ca. 86 µm.

### Beispiel 2:

Eine Mischung aus 75 Massen-% eines Ethylen-Vinylacetat-Copolymeren (I) und 5 Massen-% eines Ionomeren (II) und 20 Massen-% eines Masterbatches aus einem Kohlenwasserstoffharz und einem Ethylen-Vinylacetat-Copolymeren (III) wurde in einer Schneckenmaschine unter Scherung und Wärmeeintrag aufgeschlossen und mit Hilfe eines Folienblaskopfwerkzeugs zu einem Schlauch ausgeformt. Das Ethylen-Vinylacetat-Copolymer (I) hatte einen Schmelzflußindex zwischen 2 und 3 g/10min, gemessen nach DIN 53735 bei 190°C unter einer Prüfkraft von 21,2 N. Der Vinylacetatgehalt des Copolymeren betrug ca. 12 Massen-%. Bei dem Ionomer (II) handelt es sich um ein Zink-Ionomer-Harz mit einem Schmelzflußindex unterhalb von 1 g/ 10 min, gemessen nach DIN 53735 bei 190°C unter einer Prüfkraft von 21,2 N. Das Ionomer hat ein Schmelzpunkt von 73°C gemessen nach der ASTM D 3418 Vorgehensweise bei einer Heizrate von 20 K/min. Nach der ASTM D 1525 Vorgehensweise wurde ein Vicat-Erweichungs-Punkt von 46°C bestimmt. Das Masterbatch (III) setzt sich zu 60 Massen-% aus einem Kohlenwasserstoffharz (i) und zu 40 Massen-% aus einem Ethylen-Vinylacetat-Copolymeren (ii) zusammen. Bei dem Kohlenwasserstoffharz (i) handelt es sich um ein Terpenharz mit einer Ring-Kugel Erweichungstemperatur nach DIN 1995 von ca. 105°C. Das Ethylen-Vinylacetat-Copolymer (ii) hat einen Vinylacetatgehalt von ca. 9 Massen-% und einen Schmelzflußindex zwischen 7 und 9 g/10min, gemessen nach DIN 53735 bei 190°C unter einer Prüfkraft von 21,2 N. Der gefertigte Schlauch hatte eine Dicke von ca. 72 µm.

### Beispiel 3:

Eine Mischung aus 85 Massen-% eines Ethylen-Vinylacetat-Copolymeren (I) und 5 Massen-% eines Ionomeren (II) und 10 Massen-% eines Masterbatches aus einem Kohlenwasserstoffharz und einem Ethylen-Vinylacetat-Copolymeren (III) wurde in einer Schneckenmaschine unter Scherung und Wärmeeintrag aufgeschlossen und mit Hilfe eines Folienblaskopfwerkzeugs zu einem Schlauch ausgeformt. Das Ethylen-Vinylacetat-Copolymer (I) hatte einen Schmelzflußindex zwischen 1,5 und 2 g/10min, gemessen nach DIN 53735 bei 190°C unter einer Prüfkraft von 21,2 N. Der Vinylacetatgehalt des Copolymeren betrug ca. 18 Massen-%. Bei dem Ionomer (II) handelt es sich um ein Zink-Ionomer-Harz mit einem Schmelzflußindex unterhalb von 1 g/ 10 min, gemessen nach DIN 53735 bei 190°C unter einer Prüfkraft von 21,2 N. Das Ionomer hat ein Schmelzpunkt von 73°C gemessen nach der ASTM D 3418 Vorgehensweise bei einer Heizrate von 20 K/min. Nach der ASTM D 1525 Vorgehensweise wurde ein Vicat-Erweichungs-Punkt von 46°C bestimmt. Das Masterbatch (III) setzt sich zu 60 Massen-% aus einem Kohlenwasserstoffharz (i) und zu 40 Massen-% aus einem Ethylen-Vinylacetat-Copolymeren (ii) zusammen. Bei dem Kohlenwasserstoffharz (i) handelt es sich um ein Terpenharz mit einer Ring-Kugel Erweichungstemperatur nach DIN 1995 von ca. 105°C. Das Ethylen-Vinylacetat-Copolymer (ii) hat einen Vinylacetatgehalt von ca. 9 Massen-% und einen Schmelzflußindex zwischen 7 und 9 g/10min, gemessen nach DIN 53735 bei 190°C unter einer Prüfkraft von 21,2 N. Der gefertigte Schlauch hatte eine Dicke von ca. 84 µm.

### Beispiel 4:

Eine Mischung aus 75 Massen-% eines Ethylen-Vinylacetat-Copolymeren (I) und 5 Massen-% eines Ionomeren (II) und 20 Massen-% eines Masterbatches aus einem Kohlenwasserstoffharz und einem Ethylen-Vinylacetat-Copolymeren (III) wurde in einer Schneckenmaschine unter Scherung und Wärmeeintrag aufgeschlossen und mit Hilfe eines Folienblaskopfwerkzeugs zu einem Schlauch ausgeformt. Das Ethylen-Vinylacetat-Copolymer (I) hatte einen Schmelzflußindex zwischen 1,5 und 2 g/10min, gemessen nach DIN 53735 bei 190°C unter einer Prüfkraft von 21,2 N. Der Vinylacetatgehalt des Copolymeren betrug ca. 18 Massen-%. Bei dem Ionomer (II) handelt es sich um ein Zink-Ionomer-Harz mit einem Schmelzflußindex unterhalb von 1 g/ 10 min, gemessen nach DIN 53735 bei 190°C unter einer Prüfkraft von 21,2 N. Das Ionomer hat ein Schmelzpunkt von 73°C gemessen nach der ASTM D 3418 Vorgehensweise bei einer Heizrate von 20 K/min. Nach der ASTM D 1525 Vorgehensweise wurde ein Vicat-Erweichungs-Punkt von 46°C bestimmt. Das Masterbatch (III) setzt sich zu 60 Massen-% aus einem Kohlenwasserstoffharz (i) und zu 40 Massen-% aus einem Ethylen-Vinylacetat-Copolymeren (ii) zusammen. Bei dem Kohlenwasserstoffharz (i) handelt es sich um ein Terpenharz mit einer Ring-Kugel Erweichungstemperatur nach DIN 1995 von ca. 105°C. Das Ethylen-Vinylacetat-Copolymer (ii) hat einen Vinylacetatgehalt von ca. 9 Massen-% und einen Schmelzflußindex zwischen 7 und 9 g/10min, gemessen nach DIN 53735 bei 190°C unter einer Prüfkraft von 21,2 N. Der gefertigte Schlauch hatte eine Dicke von ca. 82 µm.

### Vergleichsbeispiel 1:

Ein Ethylen-Vinylacetat-Copolymer mit einem Vinylacetatanteil von ca. 28 Massen-% wurde mit dem gleichen, für die Beispiele 1 bis 4 eingesetzten Schneckenwerkzeug unter Scherung und Wärmeeintrag aufgeschlossen und zu einem Schlauch ausgeformt. Das Copolymer hatte einen Schmelzflußindex von ca. 3 g/10min, gemessen nach DIN 53735 bei 190°C unter einer Prüfkraft von 21,2 N. Da die Folie auf dem Wickel vollkommen verblockte, wurde zur Musterziehung ein silikonisiertes Trennpapier beim Aufwickeln zugelaufen lassen. Hierdurch war es möglich die Muster für weitere Untersuchungen von diesem gefertigten Schlauch zu ziehen. Der gefertigte Schlauch hatte eine Dicke von ca. 84 µm.

### Vergleichsbeispiel 2:

Ein Ethylen-Vinylacetat-Copolymer mit einem Vinylacetatanteil von ca. 12 Massen-% wurde mit dem gleichen, für die Beispiele 1 bis 4 eingesetzten Schneckenwerkzeug unter Scherung und Wärmeeintrag aufgeschlossen und zu einem Schlauch ausgeformt. Das Copolymer hatte einen Schmelzflußindex zwischen 2 und 3 g/10min, gemessen nach DIN 53735 bei 190°C unter einer Prüfkraft von 21,2 N. Es handelt sich bei diesem Copolymeren um das selbe Material wie die Mischungskomponente (I) aus Beispiel 1 und 2. Da die Folie auf dem Wickel leicht verblockte, wurde zur Musterziehung ein silikonisiertes Trennpapier beim Aufwickeln zugelaufen lassen. Hierdurch war es möglich die Muster für weitere Untersuchungen von diesem gefertigten Schlauch zu ziehen. Der gefertigte Schlauch hatte eine Dicke von ca. 86 µm.

### Vergleichsbeispiel 3:

Ein Ethylen-Vinylacetat-Copolymer mit einem Vinylacetatanteil von ca. 18 Massen-% wurde mit dem gleichen, für die Beispiele 1 bis 4 eingesetzten Schneckenwerkzeug unter Scherung und Wärmeeintrag aufgeschlossen und zu einem Schlauch ausgeformt. Das Copolymer hatte einen Schmelzflußindex zwischen 1,5 und 2 g/10min, gemessen nach DIN 53735 bei 190°C unter einer Prüfkraft von 21,2 N. Es handelt sich bei diesem Copolymeren um das selbe Material wie die Mischungskomponente (I) aus Beispiel 3 und 4. Da die Folie auf dem Wickel leicht verblockte, wurde zur Musterziehung ein silikonisiertes Trennpapier beim Aufwickeln zugelaufen lassen. Hierdurch war es möglich die Muster für weitere Untersuchungen von diesem gefertigten Schlauch zu ziehen. Der gefertigte Schlauch hatte eine Dicke von ca. 70 µm.

An den im Rahmen der Beispiele und der Vergleichsbeispiele hergestellten Folienmustern wurden die folgenden Prüfungen durchgeführt:

### Abwickelverhalten:

Das Abwickelverhalten wurde am gefertigten Rollenmuster untersucht. Dabei wurde der Schlauch in einer Liegebreite von ca. 250 mm auf einer Länge von 20 m aufgewickelt. Es ergab sich hierdurch einen Rollengewicht inklusive der Aufwickelhülse von ca. 1,5 kg. Die Abwickelbarkeit wurde in die folgenden Kategorien eingeteilt:

Abwicklung durch Rolleneigengewicht (+):Fixiert man das losen Schlauchende des Rollenmusters und läßt man dann das Muster hängen, so rollt sich der gefertigte Schlauch durch die eigene Gewichtskraft ab.
- Rolle leicht verblockt (0):: Ein Abrollen durch das Rollenmustereigengewicht ist zwar nicht möglich, jedoch läßt sich der Schlauch schadensfrei (keine Überdehnungen oder Abrisse) abwickeln.
- Rolle verblockt (-):: Ein Abrollen, ohne die Schlauchform stark zu deformieren bzw. zu zerstören, ist nicht möglich.

### Haft- und Gleitreibzahl:

Die dimensionslosen Haft- und Gleitreibungszahlen der Folienmuster wurden nach DIN 53375 im Kontakt Folie/Metall bestimmt.

### Zugversuch

Der Zugversuch zur Ermittlung der Zugfestigkeit und Reißdehnung wurde nach DIN 53455 7-5 durchgeführt. Es wurden Prüfkörper längs und quer zur Fertigungslaufrichtung untersucht.

### Rauhtiefe

Die Rauhtiefe wurde durch mechanische Abtastung mit einem Prüfgerät der Fa. Feinprüf-Perthen untersucht. Die angegebene Rauhtiefe entspricht der in der DIN 4768/1 angegebenen Definition. Bei der Prüfung wurde jedoch abweichend von den Empfehlungen der Norm eine Länge der Meßstrecke lₘ von 12,5 mm und entsprechend eine Grenzwellenlänge l_{c} von 2,5 mm bei allen Messungen gewählt, um so eine Vergleichbarkeit der Meßwerte auch bei rauhen Filmoberflächen gewährleisten zu können.

### Verbundhaftung

Die Verbundhaftung der gefertigten Schläuche wurden in einem einfachen Kaschierversuch untersucht. Hierzu wurden mit den Hotmeltfolien eine biaxial gereckte Polypropylenfolie mit einem schwarz bedruckten Papierbogen verbunden. Zu diesem Zweck wurde auf den Prüfbogen die zu untersuchenden Filme fixiert und anschließend mit dem zulaufenden Polypropylenfilm auf einer Thermokaschiermaschine der Firma Billhöfer kaschiert. Als Prozeßbedingungen wurde hierbei eine Kaschiertempertur von ca. 120°C, ein Kaschierzylinderdruck von 150 bar und eine Kaschiergeschwindigkeit von 5 m/min gewählt. Aus diesen gefertigten Mustern werden in Laufrichtung Prüfstreifen mit einer Breite von 15 mm geschnitten. An diesen Streifen wird die Verbundhaftung durch Abzug unter einem Winkel von 90° und Aufnahme der Abzugskraft getestet.

Die in der Tabelle 1 wiedergegebenen Prüfdaten zeigen deutlich, daß die erfindungsgemäßen Folien gegenüber den Vergleichsfolien aus Copolymer-Harzen, die mit den selben Anteilen beziehungsweise deutlich höheren Anteilen an polaren Comonmereinheiten ausgestattet sind, überlegen sind. Die Oberflächenrauhigkeit der erfingungsgemäßen Beispielfolien ist gegenüber der Vergleichsbeispielfolie mehr als verdoppelt. Mit den hohen Oberflächenrauhigkeiten verbunden ist auch gleichzeitig eine niedrige Reibung der Folie gegenüber Metall und damit eine gute Maschinengängigkeit gewährleistet. Weiterhin erkennt man, daß durch Zugabe von Kohlenwasserstoffharzen die Verbundhaftung beim Kaschieren mit Papier erheblich gesteigert werden kann. Hierdurch lassen sich Werte erreichen, die deutlich über den Werten einer hoch vinylacetathaltigen Folie, die den Nachteil des mangelhaften Abwickelverhaltens und der sehr schlechten Maschinengängigkeit besitzt, liegen.

Die an den im Rahmen der Beispiele und Vergleichsbeispiele hergestellten Folien ermittelten Reibungszahlen hängen von der Oberflächenstruktur ab. Letztere ist neben der Rezeptur und damit dem Comonomer-Anteil auch von der Foliendicke und damit den Ausziehbedingungen, denen die Polymerschmelze bei der Folienherstellung unterworfen wird, abhängig. Oberflächenparameter lassen sich deshalb bevorzugt vergleichen, wenn die Folien unter gleichen oder möglichst ähnlichen Herstellungsbedingungen erhalten werden.

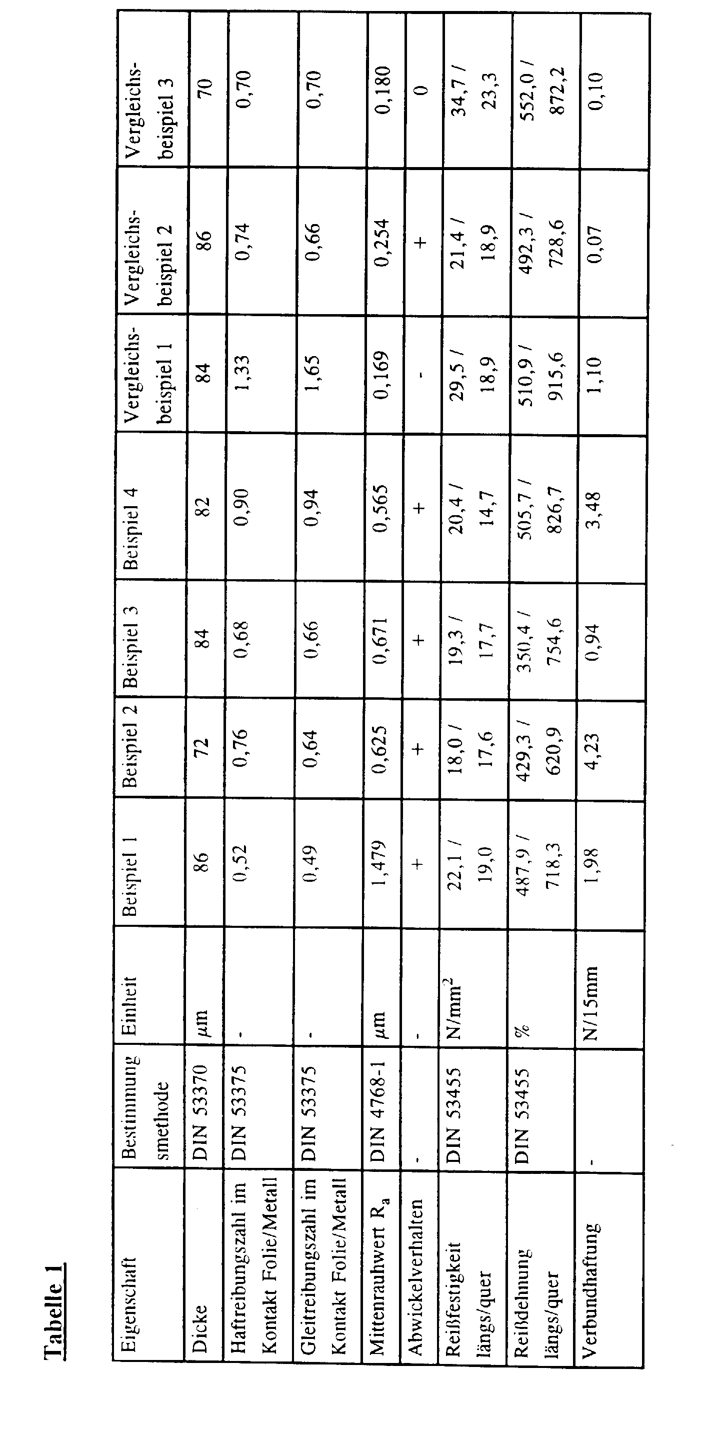

## Patentansprüche

1. Einschichtige Folie bestehend aus einer Polymermischung, die sich aus
(i) 35 - 96,0 Massen-% von mindestens einem Copolymeren aus Ethylen und Vinylacetat,
(ii) 2 - 35 Massen-% von mindestens einem Copolymeren aus Ethylen sowie Säuregruppen und/oder Estergruppen und/oder anderen polaren Gruppen inklusive deren Salze oder mindestens einem Copolymeren aus einem α-Olefin mit 3 bis 10 Kohlenstoffatomen sowie Säuregruppen und/oder Estergruppen und/oder anderen polaren Gruppen inklusive deren Salze oder mindestens einem Terpolymeren aus Ethylen und einem α-Olefinmit 3 bis 10 Kohlenstoffatomen sowie Säuregruppen und/oder Estergruppen und/oder anderen polaren Gruppen inklusive deren Salze.
(iii) 2 - 30 Massen-% von mindestens einem niedermolekularen Harz mit einer durchschnittlichen Molekularmassse von weniger als 2000 g/mol zur Klebverbesserung, das der Polymerrohstoffmischung in Form eines Masterbatches hinzugefügt wurde,sowie
(iv) 0 - 5 Massen-% der üblichen Additive und Hilfmittel, bei denen es sich um Stabilisatoren, optische Aufheller, feinpigmentierte Farbstoffe und/oder Gleitmittel handelt,
zusammensetzt.

2. Folie nach Anspruch 1, dadurch gekennzeichnet, daß als Hilfsmittel bzw. Additiv Glycerinmonostearat, Ölsäureamid, Erucasäureamid und/oder Polysiloxan vorliegt.

3. Folie nach Anspruch 1 oder 2, dadurch gekennzeichnet, daß der Gesamtanteil der Sauerstoffenthaltenden Comonomeren an der Gesamtmasse der die Folie bildenden Polymerharze zwischen 3 Massen-% und 30 Massen-% beträgt.

4. Folie nach einem der Ansprüche 1 - 3, dadurch gekennzeichnet, daß die Mischungsbestandteile (ii) einen Anteil von 2 - 35 Massen-% an der Polymermischung besitzen und aus Copolymeren enthaltend Ethylen und mindestens ein Comonomeres aus Vinylacetat, Methylacrylsäure, ihrer Salze, ihrer Ester, Acrylsäure, ihrer Salze oder ihrer Ester bestehen.

5. Folie nach einem der Ansprüche 1 bis 4, dadurch gekennzeichnet, daß die Mischungsbestandteile (ii) einen Anteil von 2 - 35 Massen-% an der Polymermischung besitzen und aus Copolymeren enthaltend Ethylen und Vinylacetat bestehen.

6. Folie nach einem der Ansprüche 1 bis 5, dadurch gekennzeichnet, daß sie eine arithmetische Mittenrauhigkeit größer als 0,3 µm besitzt.

7. Folie nach einem der Ansprüche 1 bis 6, dadurch gekennzeichnet, daß der Meltflowindex der Polymermischung höchstens 25 g/10 min (gemessen nach ASTM D 1238 bei 190°C und 21,2 N) beträgt.

8. Folie nach einem der Ansprüche 1 bis 7, dadurch gekennzeichnet, daß der Meltflowindex der Polymermischung höchstens 10 g/10 min (gemessen nach ASTM D 1238 bei 190°C und 21,2 N) beträgt.

9. Folie nach einem der Ansprüche 1 bis 8, dadurch gekennzeichnet, daß der Meltflowindex der einzelnen verwendeten Co- und/oder Terpolymeren jedoch nicht der niedermolekularen Harze maximal 99 g/10 min (gemessen nach ASTM D 1238 bei 190°C und 21,2 N) beträgt.

10. Folie nach einem der Ansprüche 1 bis 9, dadurch gekennzeichnet, daß der Meltflowindex der einzelnen verwendeten Co- und/oder Terpolymeren jedoch nicht der niedermolekularen Harze maximal 19 g/10 min (gemessen nach ASTM D 1238 bei 190°C und 21,2 N) beträgt.

11. Folie nach einem der Ansprüche 1 bis 10, dadurch gekennzeichnet, daß die Polymermischung einen Anteil an Säuregruppen und/oder Estergruppen und/oder anderen polaren Gruppen inklusive deren Salze von maximal 20 Massen-% besitzt.

12. Folie nach einem der Ansprüche 1 bis 11, dadurch gekennzeichnet, daß die Polymermischung einen Anteil an Säuregruppen und/oder Estergruppen und/oder anderen polaren Gruppen inklusive deren Salze von maximal 16 Massen-% besitzt.

13. Folie nach einem der Ansprüche 1 bis 12, dadurch gekennzeichnet, daß das oder die niedermolekularen Harze in Form eines Masterbatches der Polymermischung kurz vor dem Verarbeitungsschritt zur Folie zugegeben werden.

14. Folie nach einem der Ansprüche 1 bis 13, dadurch gekennzeichnet, daß das Masterbatch aus 20 - 90 Massen-% niedermolekularen Harzen und aus 10 bis 80 Massen-% von mindestens einem Copolymeren, das sich zusammensetzt zum einen aus mindestens 80 Massen-% Ethylen und zum anderen aus Vinylacetat oder Methylacrylsäure oder ihrer Salze oder ihrer Ester oder Acrylsäure oder ihrer Salze oder ihrer Ester, besteht.

15. Folie nach einem der Ansprüche 1 bis 14, dadurch gekennzeichnet, daß der nach ASTM D 3418 bei einer Aufheizrate von 10 K/min gemessen maximale Schmelzpunkt der Polymermischung kleiner als 110°C ist.

16. Einschichtige Folie nach einem der Ansprüche 1 bis 15, dadurch gekennzeichnet, daß sie uniaxial oder biaxial verstreckt ist.

17. Mindestens zweischichtige Mehrschichtfolie, wobei Schicht a, die auch als Klebschicht bezeichnet wird, aus einer der unter Anspruch 1 - 15 beschriebenen Polymermischungen besteht und die weiteren Schichten, die auch als Trägerschichten bezeichnet werden, aus Polyethylen und/oder aus Polymeren aus α-Olefinen mit 3 bis 10 Kohlenstoffatomen in der polymeren Wiederholungseinheit und/oder aus Polyvinylchlorid und/oder aus Polyester und/oder aus Polyamid bestehen.

18. Mindestens zweischichtige Mehrschichtfolie nach Anspruch 17, dadurch gekennzeichnet, daß die Trägerschicht bzw. Trägerschichten mit Gleitmitteln auf Basis Glycerinmonostearat, Ölsäureamid, Erucasäureamid oder Polysiloxane und mit Antiblockadditiven auf Basis Siliziumdioxid, Calciumcarbonat, Titandioxid, natürlichen oder synthetischen Kieselsäuren oder einem Polymer, dessen Schmelzverhalten sowie rheologischen Eigenschaften so abgestimmt sind, daß es in dem Trägerwerkstoff eine eigene Phase ausbildet, versetzt sind und die einseitig eine hochglänzende Oberfläche besitzt.

19. Mindestens dreischichtige Trägerfolie nach Anspruch 17, dadurch gekennzeichnet, daß mindestens eine der Trägerschichten mit Gleitmitteln auf Basis Glycerinmonostearat, Ölsäureamid, Erucasäureamid oder Polysiloxane und die Trägerschicht, die die Folienaußenseite bildet und eine matte Struktur aufweist, eine Schichtdicke von 0,5 bis 5,0 µm hat und aus
10 - 78 Massen-% eines oder mehrerer Polyethylen-Polypropylen-Blockcopolymeren
2 - 15 Massen-% eines auf Ethylen basierenden Co- oder Terpolymeren das modifiziert ist mit polaren Gruppen,
15 - 45 Massen-% eines aus Ethylen-Propylen oder Ethylen-Butylen oder Propylen-Butylen oder Ethylen-Propylen-Butylen aufgebauten Co- oder Terpolymeren,
5 - 30 Massen-% eines Polyethylens mit hoher Dichte und
0 - 5 Massen-% Antiblockadditiven auf Basis Siliziumdioxid, Calciumcarbonat Titandioxid, natürlichen oder synthetischen Kieselsäuren besteht.

20. Mehrschichtige Folie nach einem der Ansprüche 16 bis 18, dadurch gekennzeichnet, daß zur Herstellung zuerst ein 1 bis 3-schichtiger Film nach an sich bekannten Verfahren extrudiert bzw. coextrudiert wird und dann dieser coextrudierte Film nach dem Verlassen der Breitschlitzdüse auf einem Kühlwalzenstuhl mit oder ohne Wasserbad abgekühlt wird und anschließend erneut auf ca. 90 bis 140°C aufgeheizt wird und danach eine Längsreckung im Verhältnis von 1:3 bis 1:7 erfährt, jedoch in einer bevorzugten Variante eine Längsreckung im Verhältnis von 1:4,5 bis 1:5,5, sowie nach der Längsreckung bei Temperaturen zwischen 150°C und 180°C eine Querreckung im Verhältnis von 1:7 bis 1:12 erfolgt, jedoch in einer bevorzugten Variante eine Querreckung im Verhältnis von 1:9 bis 1:11, wobei vor dem Auslauf aus dem Recktunnel der Film thermofixiert wird, und vor dem Aufwickeln eine Oberflächenbehandlung einseitig oder beidseitig erfolgt, wobei die Klebschicht, bestehend aus der Polymermischung nach Anspruch 1 bis 8, hierbei (I) in-line durch Coextrusion oder durch ein zusätzliches Auftragswerk vor der Längsreckung oder durch ein zusätzliches Auftragswerk nach der Längsreckung aber vor der Querreckung oder durch ein zusätzliches Auftragswerk nach der Querreckung aufgebracht wird oder (II) off-line in einem nachgeschalteten Verfahrensschritt auf die Folie aufgetragen wird.

21. Folie nach einem der Ansprüche 1 bis 20, dadurch gekennzeichnet, daß sie durch Corona-, Flamm-, Plasma- und/oder Fluorbehandlung, in ihrer Oberflächenbeschaffenheit an die zu verbindende Substrate angepaßt werden.

22. Verwendung von Folien gemäß einem der Ansprüche 1 bis 21.

## Claims

1. A single-layer film consisting of a polymer mixture which is composed of
(i) 35 - 96.0 % by weight of at least one copolymer of ethylene and vinyl acetate,
(ii) 2 - 35 % by weight of at least one copolymer of ethylene and of acid groups and/or ester groups and/or other polar groups including salts thereof, or of at least one copolymer of an α-olefine comprising 3 to 10 carbon atoms and of acid groups and/or ester groups and/or other polar groups including salts thereof, or of at least one terpolymer of ethylene and an α-olefine comprising 3 to 10 carbon atoms and of acid groups and/or ester groups and/or other polar groups including salts thereof.
(iii) 2 - 30 % by weight of at least one low molecular weight resin with an average molecular weight less than 2000 g/mole for improving adhesion, which has been added in the form of a master batch to the mixture of polymer raw materials, as well as
(iv) 0 - 5 % by weight of customary additives and adjuvant substances comprising stabilisers, optical brighteners. finely pigmented colorants and/or internal lubricants.

2. A film according to claim 1, characterised in that glycerol monostearate, oleic acid amide, erucic acid amide and/or a polysiloxane are present as additives or adjuvant substances.

3. A film according to claims 1 or 2, characterised in that the total content of oxygen-containing comonomers with respect to the total weight of the polymer resins which form the film is between 3 % by weight and 30 % by weight.

4. A film according to any one of claims 1 - 3, characterised in that mixture constituents (ii) are present at a content of 2 - 35 % by weight with respect to the polymer mixture and consist of copolymers which contain ethylene and at least one comonomer comprising vinyl acetate. methylacrylic acid. salts thereof, esters thereof, acrylic acid. salts thereof or esters thereof.

5. A film according to any one of claims 1 to 4, characterised in that mixture constituents (ii) are present at a content of 2- 35 % by weight with respect to the polymer mixture and consist of copolymers which contain ethylene and vinyl acetate.

6. A film according to any one of claims 1 to 5, characterised in that it has an arithmetic mean peak-to-valley height greater than 0.3 µm.

7. A film according to any one of claims 1 to 6, characterised in that the melt flow index of the polymer mixture is 25 g/10 minutes at most (as measured according to ASTM D 1238 at 190°C and 21.2 N).

8. A film according to any one of claims 1 to 7. characterised in that the melt flow index of the polymer mixture is 10 g/10 minutes at most (as measured according to ASTM D 1238 at 190°C and 21.2 N).

9. A film according to any one of claims 1 to 8, characterised in that the maximum melt flow index of the individual co- and/or terpolymers which are used, but not that of the low molecular weight resins. is 99 g/10 minutes (as measured according to ASTM D 1238 at 190°C and 21.2 N).

10. A film according to any one of claims 1 to 9, characterised in that the maximum melt flow index of the individual co- and/or terpolymers which are used, but not that of the low molecular weight resins. is 19 g/10 minutes (as measured according to ASTM D 1238 at 190°C and 21.2 N).

11. A film according to any one of claims 1 to 10, characterised in that the polymer mixture has a maximum content of acid groups and/or of ester groups and/or of other polar groups, including salts thereof, of 20 % by weight.

12. A film according to any one of claims 1 to 11, characterised in that the polymer mixture has a maximum content of acid groups and/or of ester groups and/or of other polar groups, including salts thereof, of 16 % by weight.

13. A film according to any one of claims 1 to 12, characterised in that the low molecular weight resin or resins are added in the form of a master batch to the polymer mixture shortly before the processing step to form the film.

14. A film according to any one of claims 1 to 13, characterised in that the master batch consists of 20 - 90 % by weight of low molecular weight resins and of 10 to 80 % by weight of at least one copolymer which is composed firstly of at least 80 % by weight of ethylene and secondly of vinyl acetate or of methylacrylic acid or salts thereof or esters thereof, or of acrylic acid or salts thereof or esters thereof.

15. A film according to any one of claims 1 to 14, characterised in that the maximum melting point of the polymer mixture as measured according to ASTM D 3418 at a heating rate of 10 K/minute is less than 110°C.

16. A single-layer film according to any one of claims 1 to 15, characterised in that it is uniaxially or biaxially stretched.

17. A multi-layer film comprising at least two layers, wherein layer a, which is also termed the adhesive layer, consists of one of the polymer mixtures described in claims 1 - 15, and the other layers, which are also termed backing layers, consist of polyethylene and/or of polymers of α-olefines comprising 3 to 10 carbon atoms in their polymeric repeat unit and/or of polyvinyl chloride and/or of a polyester and/or of a polyamide.

18. A multi-layer film according to claim 17 comprising at least two layers, characterised in that the backing layer or backing layers are treated with internal lubricants based on glycerol monostearate, oleic acid amide. erucic acid amide or polysiloxanes and with anti-seizing additives based on silica, calcium carbonate, titanium dioxide, natural or synthetic hydrated silicas, or with a polymer, the melting behaviour and rheological properties of which are adjusted so that a separate phase is formed in the backing material, which film has a high-gloss surface on one side.

19. A multi-layer film according to claim 17 comprising at least three layers, characterised in that at least one of the backing layers is treated with internal lubricants based on glycerol monostearate, oleic acid amide, erucic acid amide or polysiloxanes, and the backing layer which forms the outside of the film and which has a matt structure has a layer thickness of 0.5 to 5.0 µm and consists of
10 - 78 % by weight of one or more polyethylene-polypropylene block copolymers
2 - 15 % by weight of a co- or terpolymer which is based on ethylene and which is modified with polar groups.
15 - 45 % by weight of a co- or terpolymer synthesised from ethylene-propylene or ethylene-butylene or propylene-butylene or ethylene-propylene-butylene,
5 - 30 % by weight of a high-density polyethylene, and
0 - 5 % by weight of anti-seizing additives based on silica, calcium carbonate, titanium dioxide, or natural or synthetic hydrated silicas.

20. A multi-layer film according to any one of claims 16 to 18, characterised in that for the production thereof a 1- to 3-layer film is first extruded or coextruded by methods known in the art and after it leaves the sheet die this coextruded film is then cooled in a cooling cylinder mill with or without a water bath and is subsequently re-heated to about 90 to 140°C, and thereafter is subjected to longitudinal stretching in a ratio of 1:3 to 1:7, but in a preferred variant longitudinal stretching is effected in a ratio of 1:4.5 to 1:5.5 and after the longitudinal stretching transverse stretching is effected at temperatures between 150°C and 180°C and in a ratio of 1:7 to 1:12, but in a preferred variant transverse stretching is effected in a ratio of 1:9 to 1:11, wherein before it emerges from the stretching tunnel the film is thermofixed, and before it is wound up a surface treatment is effected on one or both sides, wherein the adhesive layer consisting of the polymer mixture according to claim 1 to 8 is thereby (I) deposited in-line by coextrusion or by an additional deposition apparatus before longitudinal stretching or by an additional deposition apparatus after longitudinal stretching but before transverse stretching or by an additional deposition apparatus after transverse stretching, or (II) is deposited on the film off-line in a downstream processing step.

21. A film according to any one of claims 1 to 20, characterised in that the nature of its surface is adapted, by corona-, flame-, plasma- and/or fluorine treatment, to the substrate to be bonded.

22. The use of films according to any one of claims 1 to 21.

## Revendications

1. Feuille monocouche constituée d'un mélange de polymères possédant la composition ci-après:
(i) à concurrence de 35 à 96,0% en masse, au moins un copolymère d'éthylène et d'acétate de vinyle,
(ii) à concurrence de 2 à 35% en masse, au moins un copolymère d'éthylène et de groupes acides et/ou de groupes esters et/ou d'autres groupes polaires, y compris de leurs sels, ou au moins un copolymère d'une α-oléfine contenant de 3 à 10 atomes de carbone et de groupes acides et/ou de groupes esters et/ou d'autres groupes polaires, y compris de leurs sels, ou au moins un terpolymère d'éthylène et d'une α-oléfine contenant de 3 à 10 atomes de carbone et de groupes acides et/ou de groupes esters et/ou d'autres groupes polaires, y compris de leurs sels,
(iii)à concurrence de 2 à 30% en masse, au moins une résine à bas poids moléculaire possédant une masse moléculaire moyenne inférieure à 2000 g/mole pour améliorer le collage, qui a été ajoutée au mélange des matières de départ polymères sous la forme d'un mélange-mère, ainsi que
(iv) à concurrence de 0 à 5% en masse, des additifs et des adjuvants habituels à propos desquels il s'agit de stabilisateurs, d'agents de blanchiment optiques, de colorants contenant des pigments finement divisés et/ou d'agents de glissement.

2. Feuille selon la revendication 1, caractérisée en ce que le monostéarate de glycérol, l'amide de l'acide oléique, l'amide de l'acide érucique et/ou le polysiloxane sont présents à titre d'adjuvant, respectivement d'additif.

3. Feuille selon la revendication 1 ou 2, caractérisée en ce que la fraction totale des comonomères oxygénés représente entre 3% en masse et 30% en masse de la masse totale des résines polymères formant la feuille.

4. Feuille selon l'une quelconque des revendications 1 à 3, caractérisée en ce que les constituants de mélange (ii) représentent une fraction de 2 à 35% en masse du mélange de polymères et sont constitués par des copolymères contenant de l'éthylène et au moins un comonomère choisi parmi le groupe comprenant l'acétate de vinyle, l'acide méthacrylique, ses sels, ses esters, l'acide acrylique, ses sels ou ses esters.

5. Feuille selon l'une quelconque des revendications 1 à 4, caractérisée en ce que les constituants (ii) du mélange représentent une fraction de 2 à 35% en masse du mélange de polymères et sont constitués par des copolymères contenant de l'éthylène et de l'acétate de vinyle.

6. Feuille selon l'une quelconque des revendications 1 à 5, caractérisée en ce qu'elle possède une rugosité moyenne arithmétique supérieure à 0,3 µm.

7. Feuille selon l'une quelconque des revendications 1 à 6, caractérisée en ce que l'indice de fluidité à chaud du mélange de polymères s'élève à une valeur maximale de 25 g/10 min (mesuré conformément à la norme ASTM D 1238 à une température de 190°C et sous une charge de 21,2 N).

8. Feuille selon l'une quelconque des revendications 1 à 7, caractérisée en ce que l'indice de fluidité à chaud du mélange de polymères s'élève à une valeur maximale de 10 g/10 min (mesuré conformément à la norme ASTM D 1238 à une température de 190°C et sous une charge de 21,2 N).

9. Feuille selon l'une quelconque des revendications 1 à 8, caractérisée en ce que l'indice de fluidité à chaud des copolymères et/ou des terpolymères individuels utilisés, mais non des résines à bas poids moléculaires, s'élève à une valeur maximale de 99 g/10 min (mesuré conformément à la norme ASTM D 1238 à une température de 190°C et sous une charge de 21,2 N).

10. Feuille selon l'une quelconque des revendications 1 à 9, caractérisée en ce que l'indice de fluidité à chaud des copolymères et/ou des terpolymères individuels utilisés, mais non des résines à bas poids moléculaires, s'élève à une valeur maximale de 19 g/10 min (mesuré conformément à la norme ASTM D 1238 à une température de 190°C et sous une charge de 21,2 N).

11. Feuille selon l'une quelconque des revendications 1 à 10, caractérisée en ce que le mélange de polymères possède une fraction de groupes acides et/ou de groupes esters et/ou d'autres groupes polaires, y compris de leurs sels, s'élevant au maximum à 20% en masse.

12. Feuille selon l'une quelconque des revendications 1 à 11, caractérisée en ce que le mélange de polymères possède une fraction de groupes acides et/ou de groupes esters et/ou d'autres groupes polaires, y compris de leurs sels, s'élevant au maximum à 16% en masse.

13. Feuille selon l'une quelconque des revendications 1 à 12, caractérisée en ce que la ou les résines à bas poids moléculaires sont ajoutées sous la forme d'un mélange-mère au mélange de polymères peu de temps avant l'étape de traitement pour obtenir la feuille.

14. Feuille selon l'une quelconque des revendications 1 à 13, caractérisée en ce que le mélange-mère est constitué, à concurrence de 20 à 90% en masse, par des résines à bas poids moléculaires et, à concurrence de 10 à 80% en masse, par au moins un copolymère composé, d'une part, d'éthylène à concurrence d'au moins 80% en masse et, d'autre part, d'acétate de vinyle ou d'acide méthacrylique ou de ses sels ou de ses esters, ou encore d'acide acrylique ou de ses sels ou de ses esters.

15. Feuille selon l'une quelconque des revendications 1 à 14, caractérisée en ce que le point de fusion maximal du mélange de polymères mesuré conformément à la norme ASTM D 3418 à un débit de chauffage de 10 K/min est inférieur à 110°C.

16. Feuille monocouche selon l'une quelconque des revendications 1 à 15, caractérisée en ce qu'elle a été soumise à un étirage uniaxe ou biaxe.

17. Feuille multicouche comprenant au moins deux couches, dans laquelle la couche a, également désignée par l'expression "couche de collage", est constituée par un des mélanges de polymères décrits dans les revendications 1 à 15", les autres couches, également désignées par l'expression "couches de support", étant constituées par du polyéthylène et/ou par des polymères d'α-oléfines contenant de 3 à 10 atomes de carbone dans l'unité structurale polymère et/ou par du chlorure de polyvinyle et/ou par du polyester et/ou par du polyamide.

18. Feuille multicouche comprenant au moins deux couches selon la revendication 17, caractérisée en ce qu'on ajoute à la couche de support, respectivement aux couches de support, des agents de glissement à base de monostéarate de glycérol, d'amide de l'acide oléique, d'amide de l'acide érucique ou de polysiloxanes, ainsi que des additifs s'opposant à l'adhérence de contact entre feuilles, à base de dioxyde de silicium, de carbonate de calcium, de dioxyde de titane, d'acides siliciques naturels ou synthétiques ou d'un polymère dont on règle le comportement de fusion, ainsi que les propriétés rhéologiques de telle sorte qu'il forme une phase propre dans le matériau de support, et la ou les couches de support possèdent, sur une face, une surface à brillant élevé.

19. Feuille de support comprenant au moins trois couches selon la revendication 17, caractérisée en ce qu'au moins une des couches de support comprenant des agents de glissement à base de monostéarate de glycérol, d'amide de l'acide oléique, d'amide de l'acide érucique ou de polysiloxanes, ainsi que la couche de support qui forme la face externe de la feuille et qui présente une structure mate, possèdent une épaisseur de couche de 0,5 à 5,0 *µ*m et sont constituées
à concurrence de 10 à 78% en masse, par un ou plusieurs copolymères séquencés de polyéthylène-polypropylène,
à concurrence de 2 à 15% en masse, par un copolymère ou par un terpolymère à base d'éthylène qui a été modifié avec des groupes polaires,
à concurrence de 15 à 45% en masse, par un copolymère ou par un terpolymère constitué d'éthylène-propylène ou d'éthylène-butylène ou de propylène-butylène ou d'éthylène-propylène-butylène,
à concurrence de 5 à 30% en masse, par un polyéthylène possédant une densité élevée, et
à concurrence de 0 à 5% en masse, par des additifs s'opposant à l'adhérence de contact entre feuilles, à base de dioxyde de silicium, de carbonate de calcium, de dioxyde de titane, d'acides siliciques naturels ou synthétiques.

20. Feuille multicouche selon l'une quelconque des revendications 16 à 18, caractérisée en ce que, pour la fabriquer, on procède d'abord à une extrusion, respectivement à une coextrusion d'un film comprenant de un à trois couches conformément à des procédés connus en soi, puis on refroidit ce film coextrudé, après qu'il a quitté la filière plate, sur un rouleau de refroidissement, en présence ou en l'absence d'un bain-marie, puis on le chauffe une nouvelle fois à une température d'environ 90 à 140°C et on le soumet ensuite à un étirage en direction longitudinale dans le rapport de 1:3 à 1:7, mais dans une variante préférée, à un étirage en direction longitudinale dans le rapport de 1:4,5 à 1:5,5, et après l'étirage en direction longitudinale, on procède à un étirage en direction transversale à des températures entre 150°C et 180°C, dans le rapport de 1:7 à 1:12, mais dans une variante préférée, à un étirage en direction transversale dans le rapport de 1:9 à 1:11; en l'occurrence, on soumet le film à un thermofixage avant sa sortie du tunnel d'étirage et, avant l'enroulement, on le soumet à un traitement superficiel sur une seule face ou sur les deux faces, la couche de collage constituée par le mélange de polymères selon les revendications 1 à 8 étant appliquée en l'occurrence sur la feuille (I) en ligne par coextrusion ou via un dispositif d'application supplémentaire avant l'étirage en direction longitudinale ou via un dispositif d'application supplémentaire après l'étirage en direction longitudinale, mais avant l'étirage en direction transversale, ou encore via un dispositif d'application supplémentaire après l'étirage en direction transversale, ou bien (II) hors-ligne dans une étape opératoire montée à la suite.

21. Feuille selon l'une quelconque des revendications 1 à 20, caractérisée en ce qu'on l'adapte à l'aide d'un traitement par effluves négatives, d'un traitement à la flamme, d'un traitement au plasma et/ou d'un traitement au fluor, en ce qui concerne sa qualité superficielle, aux substrats à relier.

22. Utilisation de feuilles selon l'une quelconque des revendications 1 à 21.
